# EUROPÄISCHE PATENTSCHRIFT

(11) **EP 2 444 230 B1**
(45) Veröffentlichungstag und Bekanntmachung des Hinweises auf die Patenterteilung: **05.10.2016**
(21) Anmeldenummer: 11185745.4
(22) Anmeldetag: 19.10.2011
(51) Int. Cl.: B29C 47/28, B29C 47/02, F21S 4/00, B29C 47/90, B29C 47/34

(54) **Verfahren zum kontinuierlichen Herstellen eines LED-Bandes**
Process for continuous manufacturing of an LED strip
Procédé de fabrication en continu d'une bande de LED

(30) Priorität: 19.10.2010 DE 102010048705
(43) Veröffentlichungstag der Anmeldung: 25.04.2012
(73) Patentinhaber: Döllken-Weimar GmbH, 99428 Nohra/Weimar (DE)
(72) Erfinder: Breuning, Wolfgang, 96275 Marktzeuln (DE)
(74) Vertreter: von dem Borne, Andreas

(56) Entgegenhaltungen:
- EP-A2- 0 760 448
- WO-A1-98/23896
- CN-U- 201 764 338
- DE-A1-102005 025 214
- DE-A1-102014 104 423
- DE-A1-102014 104 433
- JP-A- 2004 119 234
- US-A- 4 521 363
- US-A- 5 151 147
- US-A- 5 888 300
- US-A1- 2003 205 313
- US-A1- 2006 260 739

## Beschreibung

Die Erfindung betrifft ein Verfahren zum kontinuierlichen Herstellen eines (endlosen) LED-Bandes, mit zumindest einem Extruder zum Erzeugen einer transparenten Kunststoffschmelze und einem Extrusionswerkzeug, durch welches ein mit zumindest mehreren Leuchtdioden bestücktes LED-Funktionsband hindurchgeführt wird, wobei das LED-Funktionsband in dem Extrusionswerkzeug in eine transparente, thermoplastische Kunststoffschmelze eingebettet wird. Transparent meint im Rahmen der Erfindung transparent für sichtbares Licht. Davon soll auch bloße (streuende) Lichtdurchlässigkeit, Transluzenz und Opazität umfasst sein.

Bestücktes LED-Funktionsband meint ein Trägerband, welches zum Beispiel in vorgegebenen Abständen mit einer Vielzahl von Leuchtdioden (LED's) bestückt ist und welches außerdem mit in Längsrichtung des Trägerbandes verlaufenden Leiterbahnen und darüber hinaus mit elektrischen bzw. elektronischen Bauelementen bestückt ist, welche in üblicher Weise für den Betrieb der Leuchtdioden erforderlich sind. Solche LED-Funktionsbänder sind aus der Praxis grundsätzlich bekannt, sie werden in der Regel mit einer Versorgungsspannung von 12 Volt oder 24 Volt (Gleichstrom) betrieben.

Aus der Praxis kennt man LED-Bänder, die in bestimmten Längen hergestellt werden und bei denen das LED-Funktionsband in einen transparenten Kunststoff eingegossen wird. Die Herstellung ist aufwendig und nachteilig ist insbesondere die Tatsache, dass sich solche LED-Bänder lediglich in sehr begrenzter Länge herstellen lassen. Dieses führt zu recht hohen Herstellungskosten und zu Beschränkungen beim praktischen Einsatz.

In der Literatur wurde bereits vorgeschlagen, LED-Bänder kontinuierlich im Wege der Extrusion herzustellen (vgl. EP 0 760 448 A2, EP 0 911 573 A2 und EP 0 611 040 B1). Das vorgefertigte LED-Funktionsband wird kontinuierlich von einer Abwickelvorrichtung abgerollt und gemeinsam mit "Bus-Elementen" einer Extrusionsvorrichtung zugeführt. In der Extrusionsvorrichtung wird das LED-Funktionsband gemeinsam mit den Bus-Elementen in ein thermoplastisches Kunststoffmaterial eingebettet. Bei dem thermoplastischen Kunststoff kann es sich zum Beispiel um ein HDPE handeln, wobei das thermoplastische Material bei einer Temperatur von weniger als 170°C extrudiert wird (vgl. EP 0 760 448 B1). Die Abkühlung des aus dem Extruder austretenden LED-Bandes kann beispielsweise in einem Wassertank erfolgen (vgl. EP 0 911 573 A2).

Die US 4,521,363 beschreibt ein Verfahren und eine Vorrichtung zum Extrudieren von dünnen, einheitlichen Beschichtungen aus fliesfähigem Kunststoff auf bzw. über einem Streifen. Dieses Verfahren soll insbesondere zur Ummantelung von magnetischen Kabeln benutzt werden. Das hierzu verwendete Extrusionswerkzeug weist einen in Transportrichtung verjüngenden Zuführkanal auf, wodurch der Streifen in der Kunststoffummantelung zentriert wird.

Aus der US 2003/205313 A1 ist ein Verfahren zur Herstellung von Drähten mit einer diskreten Länge bekannt. Das Verfahren soll insbesondere zur Herstellung von medizinischen Führungsdrähten eingesetzt werden.

Auch die US 2006/260739 A1 und die JP 2004-119234 befassen sich jeweils mit der Herstellung bzw. Ummantelung von Kabeln.

Die WO 98/23896 beschreibt ein Herstellungsverfahren von Leiterelementen wie beispielsweise auch LED-Bändern, wobei die LED-Bänder in einem kontinuierlichen Prozess, beispielsweise im Extrusionsverfahren, mit einem Kunststoffmaterial ummantelt werden.

Die Herstellung von LED-Bändern im Wege der Extrusion wird beispielsweise auch in der WO 2006/125338 A1 und der JP 2003347593 A (Patent Abstracts of Japan) beschrieben.

Trotz dieser Anregungen im druckschriftlichen Stand der Technik bereitet die kontinuierliche Herstellung von endlosen LED-Bändern im Wege der Extrusion in der Praxis Schwierigkeiten. Auf dem Markt sind daher bislang lediglich LED-Bänder in begrenzten Längen verfügbar, bei denen die LED-Bänder in bestimmten Längen in eine Vergussmasse eingegossen werden. - Hier setzt die Erfindung ein.

Der Erfindung liegt die Aufgabe zugrunde, eine Vorrichtung der eingangs beschriebenen Art zu schaffen, mit der sich "endlose" LED-Bänder in wirtschaftlicher Weise mit hoher Qualität kontinuierlich herstellen lassen.

Zur Lösung dieser Aufgabe lehrt die Erfindung ein Verfahren zum kontinuierlichen Herstellen eines (endlosen) LED-Bandes, mit den Merkmalen des Anspruchs 1. Dabei wird ein Extrusionswerkzeug verwendet, das zumindest einen oberen Schmelzekanal und einen unteren Schmelzekanal aufweist, welche in einen formgebenden Düsenkanal münden, durch den das LED-Funktionsband hindurchgeführt wird, wobei dem Düsenkanal ein sich entgegen der Transportrichtung aufweitender Zuführkanal für das LED-Funktionsband vorgeordnet ist.

Bei dem erfindungsgemäßen Verfahren wird ein mit mehreren Leuchtdioden bestücktes LED-Funktionsband in einer Extrusionsvorrichtung kontinuierlich in eine Schmelze aus zumindest einem transparenten thermoplastischen Kunststoff eingebettet. Die Schmelze wird dabei mit der Maßgabe in das Extrusionswerkzeug eingeführt, das sich in einem Zuführkanal, durch den das LED-Funktionsband zugeführt wird, eine Schmelzewulst entgegen der Transportrichtung ausbildet, in welche das LED-Funktionsband einläuft. Erfindungsgemäß weitet sich der Zuführkanal auf eine maximale Höhe auf, welche größer als die Höhe des formgebenden Düsenkanals ist, wobei die maximale Höhe des Zuführkanals zumindest 50 % größer als die Höhe des Düsenkanals ist.

Die Erfindung geht von der Erkenntnis aus, dass sich ein LED-Funktionsband besonders gut in die Schmelze einbetten lässt, wenn mit mehreren Schmelzekanälen gearbeitet wird, so dass die Schmelze sowohl von oben als auch von unten zugeführt wird. Dabei geht die Erfindung außerdem von der überraschenden Erkenntnis aus, dass sich in einem entgegen der Transportrichtung aufweitenden Zuführkanal während des Betriebes entgegen der Transportrichtung eine Schmelzewulst bzw. Schmelzewelle ausbildet, in die das LED-Funktionsband vor Erreichen des Düsenkanals einläuft. Das LED-Funktionsband und die Kunststoffschmelze treffen folglich nicht erst in dem Punkt aufeinander, indem der obere und untere Schmelzekanal in den formgebenden Düsenkanal münden, sondern der sich aufweitende Zuführkanal ermöglicht die Ausbildung der beschriebenen Schmelzewulst, die dazu führt, dass das LED-Funktionsband bereits vor dem Auftreffpunkt bzw. Mündungspunkt in die Schmelze eingebettet wird. Überraschenderweise führt dieses dazu, dass ein LED-Funktionsband mit hoher Qualität und insbesondere einem über die Länge homogenen Querschnitt entsteht. Praktische Versuche haben gezeigt, dass trotz der komplizierten geometrischen Struktur des LED-Funktionsbandes und insbesondere trotz des über Länge und Breite des LED-Funktionsbandes stark variierenden Profils bzw. Querschnitts trotzdem ein einwandfreies LED-Band entsteht.

Dieses gelingt sogar und insbesondere auch dann, wenn mit verhältnismäßig niedrigschmelzenden Kunststoffen gearbeitet wird. Denn besonders bevorzugt lässt sich die erfindungsgemäße Vorrichtung für die Herstellung eines LED-Bandes einsetzen, bei welchem das LED-Funktionsband in eine Schmelze aus Polyurethan oder mit Polyurethan, besonders bevorzugt eine Schmelze aus einem Polyurethan-Elastomer eingebettet wird. Diese Polyurethan-Elastomere lassen sich bei verhältnismäßig niedrigen Temperaturen verarbeiten. Die PU-Schmelze kann eine Temperatur von weniger als 150°C, vorzugsweise weniger als 140°C, zum Beispiel bis zu 130°C aufweisen. Insbesondere mit einem solchen Kunststoff lassen sich mit der erfindungsgemäßen Vorrichtung LED-Bänder hoher Qualität herstellen.

Der obere Schmelzekanal und/oder der untere Schmelzekanal ist bzw. sind unter einem (mittleren) Winkel α von 10° bis 45°, vorzugsweise 15° bis 30° gegen die Transportrichtung bzw. gegen die Horizontale angeordnet. Dabei kann sich der obere und/oder untere Schmelzekanal entgegen der Schmelzeflussrichtung aufweiten und folglich in Schmelzeflussrichtung verjüngen. Der Öffnungswinkel des Schmelzekanals bzw. der Schmelzekanäle kann zum Beispiel 1° bis 5° betragen.

Der Zuführkanal kann sich entgegen der Transportrichtung mit einem Öffnungswinkel β von 3° bis 15°, vorzugsweise 5° bis 10° aufweiten.

Nach einem weiteren Vorschlag der Erfindung ist das Werkzeug aus mehreren in Transportrichtung hintereinander angeordneten Werkzeug-Platten zusammengesetzt, wobei der formgebende Düsenkanal in einer austrittsseitig angeordneten ersten Platte angeordnet ist und wobei der Zuführkanal im Bereich einer der ersten Platte vorgeordneten zweiten Platte angeordnet ist. Dabei münden die Schmelzekanäle im Übergangsbereich zwischen der ersten Platte und der zweiten Platte in das eingangsseitige Ende des Düsenkanals. Durch diesen plattenartigen Aufbau lassen sich die Werkzeuge kostengünstig herstellen, montieren und warten. Dieses ist insbesondere dann zweckmäßig, wenn aufgrund der Eigenschaften der verwendeten Kunststoffe in regelmäßigen Abständen aufwendige Reinigungsarbeiten erfolgen müssen.

So ist es ferner zweckmäßig, wenn der zweiten Platte zumindest eine dritte Platte vorgeordnet ist, wobei der Zuführkanal dann vorzugsweise im Bereich sowohl der zweiten Platte als auch der dritten Platte angeordnet ist.

Das Werkzeug weist außerdem zumindest einen Schmelzeverteilkanal auf, über welchen die Schmelze von dem Schneckenextruder den Schmelzekanälen zugeführt wird, wobei der Schmelzeverteilkanal zwischen der zweiten und der dritten Platte angeordnet ist. Es versteht sich, dass zwischen den einzelnen Platten geeignete Dichtungen oder geeignete Dichtmittel bzw. Dichtvorrichtungen vorgesehen sind, um die im Zuge des Zusammenfügens der Platten entstehenden Kanäle zuverlässig abzudichten.

Ferner schlägt die Erfindung in bevorzugter Weiterbildung vor, dass der Zuführkanal und folglich der sich erfindungsgemäße entgegen der Transportrichtung aufweitende Zuführkanal nicht unmittelbar in die zweite Platte und die dritte Platte eingebracht ist, sondern dass in die zweite Platte und gegebenenfalls auch in die dritte Platte ein Einsatz, zum Beispiel ein Keileinsatz eingesetzt ist, wobei der Zuführkanal von diesem Keileinsatz gebildet bzw. in diesem Keileinsatz angeordnet ist. Die Schmelzekanäle können dabei zwischen der Ausnehmung der zweiten Platte (und gegebenenfalls der dritten Platte) und dem Keileinsatz gebildet werden.

Insgesamt zeichnet sich das erfindungsgemäße Werkzeug durch einen sehr einfachen Aufbau und sehr einfache Handhabung, insbesondere auch im Zuge der Wartung und Montage aus. Von besonderer Bedeutung ist dabei der sich entgegen der Transportrichtung aufweitende Zuführkanal, welcher die Ausbildung der beschriebenen Schmelzewulst ermöglicht und damit entscheidenden Einfluss auf die Qualität der herzustellenden Bänder hat.

Grundsätzlich besteht die Möglichkeit, im Zuge der Herstellung beim Anfahren der Anlage unmittelbar ein bestücktes LED-Funktionsband in das Werkzeug einzuführen. Versuche in der Praxis haben jedoch gezeigt, dass in einem gewissen Vorlaufbereich über mehrere Meter die Qualität des hergestellten LED-Bandes nicht zufriedenstellend ist. Es wird folglich ein Ausschuss vorgegebener Länge produziert. Um die Kosten für die Produktion dieses Ausschusses zu reduzieren, kann es zweckmäßig sein, im Zuge des Anfahrens der Anlage zunächst ein dem LED-Funktionsband vorgeordnetes, unbestücktes Trägerband als gleichsam Leerband oder Vorlauf in die Kunststoffschmelze einzubetten und nach diesem Vorlauf vorgegebener Länge das bestückte LED-Funktionsband in das Extrusionswerkzeug einzuführen. Während dieses Vorlaufes, dass heißt während des Einführens des unbestückten Trägerbandes kann es zweckmäßig sein, in den sich aufweitenden Trägerzuführkanal ein Kompensationseinsatz einzusetzen, der auch als "Schuh" bezeichnet wird und der einen Leerband-Zuführkanal bildet, wobei sich dieser Leerband-Zuführkanal nicht, wie der Trägerzuführkanal, aufweitet, sondern über seine Länge einen im Wesentlichen konstanten Querschnitt aufweist.

Die sich ausbildende Schmelzewulst hat vorzugsweise eine Höhe, die größer ist als die Höhe des fertigen LED-Bandes und/oder größer als die Höhe des formgebenden Düsenkanals des Werkzeuges ist. Bevorzugt bildet sich eine Schmelzewulst aus, deren Höhe zumindest 50 % größer als die Höhe des fertigen LED-Bandes und/oder des formgebenden Düsenkanals des Werkzeuges ist. So kann die Höhe der Schmelzewulst zum Beispiel zumindest zweimal so groß sein wie die Höhe des fertigen LED-Bandes bzw. des formgebenden Düsenkanals. Es wird erfindungsgemäß ein Werkzeug verwendet, bei welchem sich der Zuführkanal auf eine maximale Höhe aufweitet, welche größer als die Höhe des formgebenden Düsenkanals ist, wobei die maximale Höhe des Zuführkanals zumindest 50 % größer als die Höhe des formgebenden Düsenkanals ist, besonders bevorzugt zumindest zweimal so groß ist. Jedenfalls führt die Ausbildung der Schmelzewulst dazu, dass sich einwandfreie LED-Bänder herstellen lassen, obwohl das einzubettende LED-Funktionsband eine aufwändige/komplizierte Struktur aufweist. Die Schmelzewulst bildet gleichsam ein Reservoir für die Schmelze, so dass während des Durchlaufs des Funktionsbandes auch bei variierender Höhe der einzubettenden Komponenten stets genügend Schmelze zur Verfügung steht und auf diese Weise ein homogenes LED-Band erzeugt wird.

Vorzugsweise wird das LED-Funktionsband in eine Schmelze aus Polyurethan, zum Beispiel einem Polyurethan-Elastomer eingebettet, wobei die PU-Schmelze eine Temperatur von weniger als 150°C, vorzugsweise weniger als 140°C, zum Beispiel bis zu 130°C aufweist.

Im Rahmen der Erfindung gelingt die Herstellung von LED-Bändern in gleichsam beliebiger Länge als Rollenware, denn die fertigen LED-Bänder lassen sich nach dem Abkühlen ohne Weiteres aufrollen und folglich auf einfache Weise lagern und transportieren. Am Einsatzort besteht dann die Möglichkeit, das LED-Band in nahezu beliebigen Längen zu konfektionieren. Denn das LED-Funktionsband wird bevorzugt mit in vorgegebenen Abständen angeordneten Anschlussstellen, sogenannten Piercing-Stellen, hergestellt. An diesen "Piercing-Stellen" lässt sich das LED-Band einfach abschneiden und kontaktieren. Das LED-Band kann folglich in sehr großen Längen verlegt werden oder aber auch in einzelne Abschnitte aufgeteilt werden, je nach Anwendungszweck. Als LED's können beispielsweise weiße LED's aber auch mehrfarbig ansteuerbare LED's, sogenannte RGB-LED's verwendet werden. In der Regel werden diese LED's mit einer Versorgungsspannung von 12 Volt oder 24 Volt (Gleichstrom) betrieben.

Die auf die erfindungsgemäße Weise bzw. mit der erfindungsgemäßen Vorrichtung hergestellten LED-Bänder lassen sich vielfältig einsetzen. Sie können zu Beleuchtungszwecken und Markierungszwecken eingesetzt werden. So lassen sie sich beispielsweise in Sockelleisten integrieren, so wie dieses zum Beispiel in dem deutschen Gebrauchsmuster DE 20 2010 002 324 beschrieben wird. Damit lassen sich Räume, Flure und Wege beleuchten aber auch Wege markieren, zum Beispiel Fluchtwege, so dass die LED-Bändern nicht nur im Innenbereich, sondern auch im Außenbereich verwendet werden können. Die einfache Kontaktierung und der Einsatz in nahezu beliebigen Längen bzw. Längenabschnitten erweitern die Einsatzmöglichkeiten. Gegenüber vergossenen LED-Bändern, die üblicherweise in diskreten Längen hergestellt werden, lassen sich die endlosen LED-Bänder kostengünstiger herstellen und auch die Montage bzw. Verlegung ist in der Regel kostengünstiger, da die LED-Bänder vor Ort an die gewünschten Gegebenheiten angepasst werden können, so dass in der Regel mit geringen Ausschuss gearbeitet wird. Die LED-Bänder zeichnen sich insbesondere dadurch aus, dass sie unempfindlich gegen Feuchtigkeit sind, so dass auch Außenanwendungen möglich sind. Die ungeschützten LED-Funktionsbänder sind zwar sehr empfindlich gegen Feuchtigkeit, durch die Einbettung in die Kunststoffmatrix, zum Beispiel PU-Kunststoffmatrix, gelingt jedoch ein hervorragender Schutz.

Es liegt im Übrigen im Rahmen der Erfindung, dass die LED-Funktionsbänder in eine (homogene) Kunststoffmasse aus einem einzigen Material eingebettet werden, die Erfindung umfasst aber auch Ausführungsformen, bei denen durch Koextrusion zwei verschiedene Materialien, zum Beispiel PU und ein anderes Material oder auch zwei verschiedene PU-Materialien verarbeitet werden.

Als Extruder kann im Rahmen der Erfindung ein herkömmlicher Extruder, zum Beispiel ein Schneckenextruder verwendet werden. Es kann sich aber auch um einen Planetenextruder oder einen Extruder anderer Bauart handeln. Extruder meint im Rahmen der Erfindung jede Vorrichtung, die zum "Herausdrücken" der Schmelze sowie gegebenenfalls auch zum Aufschmelzen geeignet ist, zum Beispiel auch eine geeignete Pumpe.

Im Folgenden wird die Erfindung anhand einer lediglich ein Ausführungsbeispiel darstellenden Zeichnung näher erläutert. Es zeigen
- Fig. 1: eine Vorrichtung zum kontinuierlichen Herstellen eines (endlosen) LED-Bandes in einer schematischen Seitenansicht,
- Fig. 2: ein bestücktes LED-Funktionsband in einer Draufsicht,

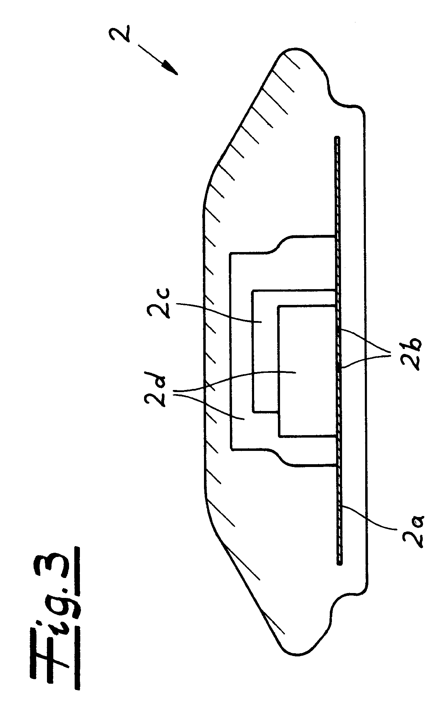

- Fig. 3: ein mit der Vorrichtung nach Fig. 1 hergestelltes LED-Band im Querschnitt,
- Fig. 4: ein Extrusionswerkzeug für die Vorrichtung nach Fig. 1 in einer perspektivischen Ansicht,
- Fig. 5: einen Schnitt durch den Gegenstand nach Fig. 4 (Ausschnitt) und
- Fig. 6: den Gegenstand nach Fig. 5 mit einem Einsatzteil ("Schuh").

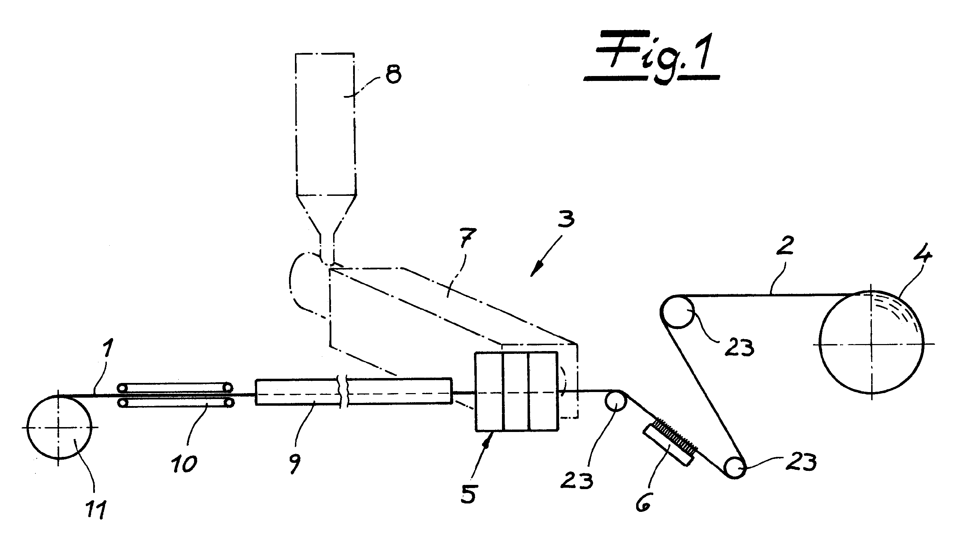

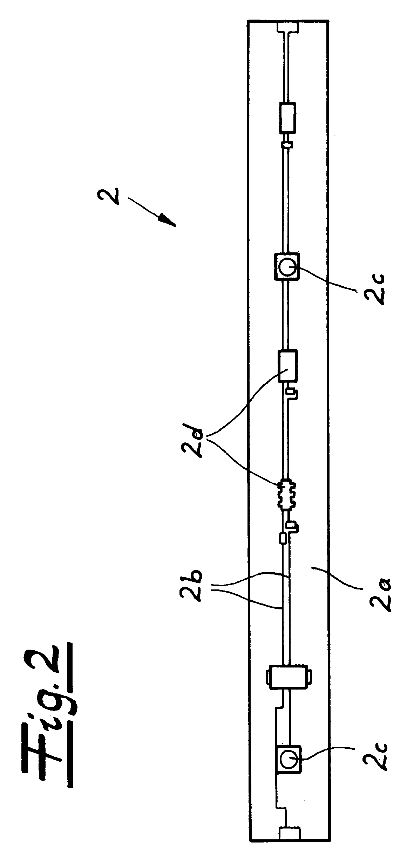

In den Figuren und insbesondere in Fig. 1 ist eine Vorrichtung zum kontinuierlichen Herstellen eines (endlosen) LED-Bandes 1 dargestellt. In dieser Vorrichtung wird ein mit mehreren Leuchtdioden bestücktes LED-Funktionsband 2 in einer Extrusionsvorrichtung 3 kontinuierlich in eine Schmelze aus einem transparenten, thermoplastischen Kunststoff eingebettet. Das noch nicht in die Schmelze eingebettete LED-Funktionsband ist vereinfacht in Fig. 2 dargestellt. Es besteht im Wesentlichen aus einem Trägerband 2a, in welches Leiterbahnen 2b, Leuchtdioden 2c und weitere elektronische Bauelemente 2d integriert sind. Dieses LED-Funktionsband 2 wird beispielsweise in Rollenform angeliefert und von einer Abwickelvorrichtung 4 abgewickelt. Gegebenenfalls wird das LED-Funktionsband um eine oder mehrere Umlenkrollen 23 herumgeführt, die in Fig. 1 angedeutet sind. Jedenfalls ist es zweckmäßig, dass das LED-Funktionsband unter einer gewissen Vorspannung gehalten wird, damit das LED-Funktionsband 2 einwandfrei in das Extrusionswerkzeug 5 einläuft. Zwischen Abwickelvorrichtung 4 und Extrusionswerkzeug 5 kann im Übrigen eine Antistatikbürste 6 oder eine vergleichbare Vorrichtung angeordnet sein, um elektrostatische Aufladungen des LED-Funktionsbandes 2 zu vermeiden bzw. zu eliminieren. Die Extrusionsvorrichtung 3, in welcher das einlaufende LED-Funktionsband 2 in die Schmelze aus thermoplastischem Kunststoff eingebettet wird, weist im Wesentlichen einen Extruder 7 und ein Extrusionswerkzeug 5 auf. Ferner ist ein lediglich angedeuteter Vorratsbehälter 8 vorgesehen, aus welchem der Kunststoff in Granulatform dem Extruder 7 zugeführt wird. In diesem Vorratsbehälter 8 kann das Granulat außerdem über einen vorgegebenen Zeitraum bei einer bestimmten Temperatur vorgetrocknet werden.

Vorzugsweise wird als thermoplastischer, transparenter Kunststoff ein Polyurethan, nämlich ein Polyurethan-Elastomer (TPU) verwendet. Das PU-Granulat wird zum Beispiel über einen Zeitraum von zwei bis drei Stunden bei einer Temperatur von 60°C bis 90°C vorgetrocknet und dann dem Schneckenextruder 7 zugeführt und in diesem aufgeschmolzen. Der Schneckenextruder 7 führt die Kunststoffschmelze dem Extrusionswerkzeug 5 zu, durch welches das LED-Funktionsband 2 hindurchgeführt wird. In dem Extrusionswerkzeug 5 wird das LED-Funktionsband folglich in die transparente Kunststoffschmelze eingebettet. Das in die Kunststoffschmelze eingebettete LED-Funktionsband tritt dann als LED-Band 1 aus dem Extrusionswerkzeug 5 aus und durchläuft eine Kalibriervorrichtung 9, welche im Ausführungsbeispiel als Wasserfilm-Kalibriervorrichtung ausgebildet ist. Diese weist ein Wasserbad mit einer Länge von mehreren Metern auf, durch welche das LED-Band im noch nicht verfestigten Zustand hindurchgeführt wird, so dass es durch Abkühlung verfestigt wird und das fertige LED-Band 1 aus der Kalibriervorrichtung 9 austritt. Der Kalibriervorrichtung 9 kann eine Abzugsvorrichtung 10 nachgeordnet sein, zum Beispiel eine herkömmliche Raupenkette. Hinter der Abzugsvorrichtung 10 kann dann eine herkömmliche Aufwickelvorrichtung 11 angeordnet sein, so dass das fertige LED-Band 1 im Anschluss als "endlose" Rollenware zur Verfügung steht.

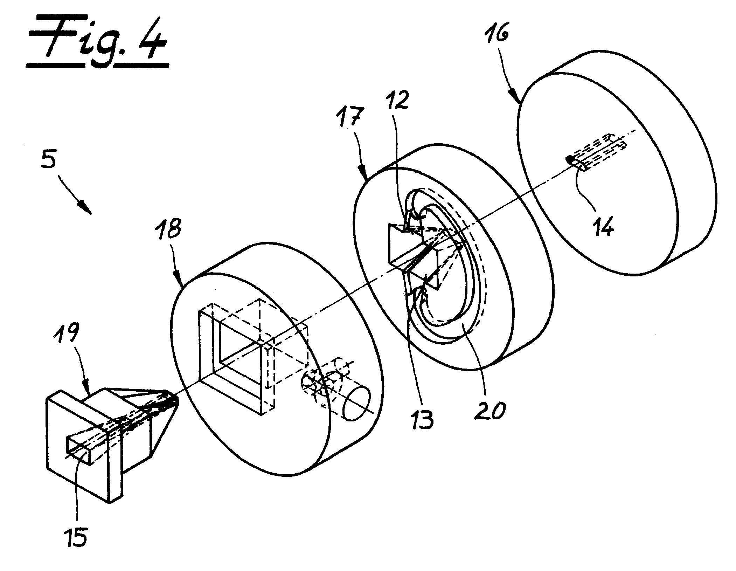

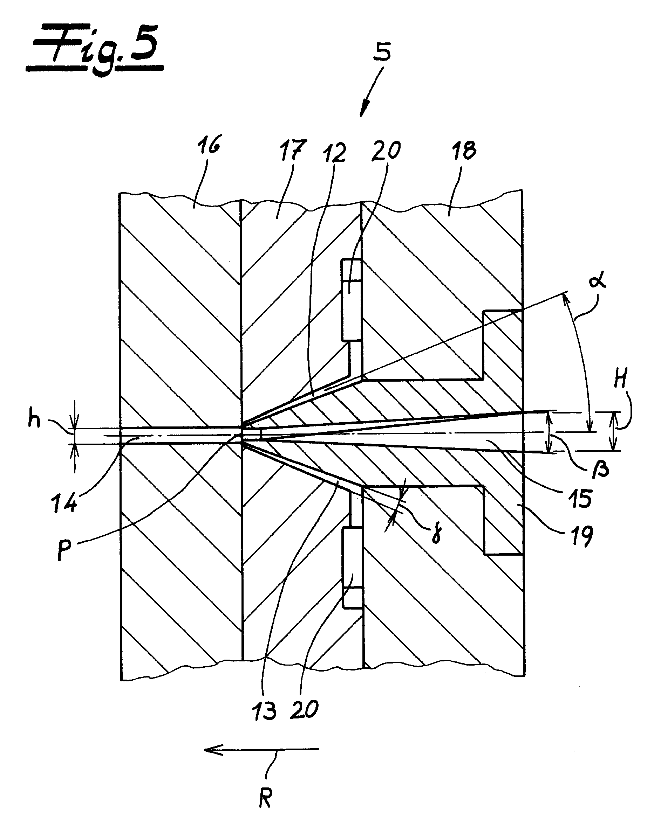

Aufbau und Funktionsweise des erfindungsgemäßen Extrusionswerkzeuges ergeben sich insbesondere aus den Fig. 4 bis 6. Es ist erkennbar, dass das Extrusionswerkzeug 5 einen oberen Schmelzekanal 12 und einen unteren Schmelzekanal 13 aufweist, welche in einen formgebenen Düsenkanal 14 münden, durch den das LED-Funktionsband 2 hindurchgeführt wird. In dem formgebenden Düsenkanal erhält das LED-Band folglich seine endgültige Form. Ferner ist insbesondere in Fig. 5 erkennbar, dass dem Düsenkanal 14 im Ausführungsbeispiel ein sich entgegen der Transportrichtung aufweitender Zuführkanal 15 vorgeordnet ist.

Im Ausführungsbeispiel setzt sich das Extrusionswerkzeug 5 im Wesentlichen aus drei Werkzeug-Platten 16, 17, 18 und einem Keileinsatz 19 zusammen. Der formgebende Düsenkanal 14 ist dabei in die austrittsseitige erste Platte 16 integriert. Der sich entgegen der Transportrichtung aufweitende Zuführkanal 15 ist im Bereich der zweiten Platte 17 und der dritten Platte 18 angeordnet, wobei dieser Zuführkanal 15 nicht in die Platten 17, 18 selbst eingeformt ist, sondern in einen separaten Keileinsatz 19, der in korrespondierende Ausnehmungen der zweiten Platte 17 und der dritten Platte 18 eingesetzt ist. Fig. 5 zeigt, dass die Schmelzekanäle 12, 13 im Übergangsbereich zwischen der erste Platte 16 und der zweiten Platte 17 in das eingangsseitige Ende des Düsenkanals 14 münden. Zwischen der zweiten Platte 17 und der dritten Platte 18 sind Schmelzeverteilerkanäle 20 gebildet, welche in die Schmelzekanäle 12, 13 münden und über welche die Schmelze aus dem Schneckenextruder 7 in die Schmelzekanäle 12, 13 zugeführt wird. Die beiden Schmelzekanäle 12, 13 werden dabei zwischen dem Keileinsatz 19 bzw. seinem keilförmigen vorderen Ende und der korrespondierenden Ausnehmung der zweiten Platte 17 gebildet.

Von Bedeutung ist die Tatsache, dass sich der Zuführkanal 15 - ausgehend von dem Zusammenführpunkt P von Schmelze einerseits und Funktionsband 2 andererseits - entgegen der Transportrichtung R aufweitet. Diese Aufweitung ermöglicht es nun, dass die Schmelze mit der Maßgabe in das Extrusionswerkzeug eingeführt wird, dass sich in dem Zuführkanal 15 eine Schmelzewulst entgegen der Transportrichtung R ausbildet, wobei das LED-Funktionsband in diese Schmelzewulst, die in den Figuren nicht dargestellt ist, einläuft. Dieses hat zur Folge, dass das LED-Funktionsband nicht erst im Zusammenführpunkt P mit der Schmelze in Kontakt kommt, sondern dass das Funktionsband in diese Schmelzewulst einläuft. Überraschenderweise führt dieses dazu, dass sich ein LED-Band herstellen lässt, welches über die Länge einen homogenen Querschnitt aufweist, und zwar trotz der Tatsache, dass das LED-Funktionsband 2 aufgrund der Bestückung einen über Länge und Breite sehr inhomogenen Querschnitt aufweist. Die gewünschte Ausbildung der Schmelzewelle lässt sich durch Steuerung des Schneckenextruders 7 einstellen.

In den Figuren ist erkennbar, dass der obere Schmelzekanal 12 und der untere Schmelzekanal 13 jeweils unter einem vorgegebenen Winkel α schräg zur Transportrichtung R bzw. zur Horizontalen angeordnet sind. Der Winkel α beträgt zum Beispiel 10° bis 30°, im Ausführungsbeispiel etwa 20° bis 23°. α meint dabei den mittleren Winkel. Denn die Schmelzekanäle 12, 13 können sich entgegen der Schmelzeflussrichtung aufweiten und folglich in Schmelzeflussrichtung verjüngen. Der Öffnungswinkel y dieser Schmelzekanäle 12, 13 beträgt zum Beispiel 1° bis 5°, im Ausführungsbeispiel etwa 3°. Außerdem ist in den Figuren der Öffnungswinkel β des Zuführkanals 15 dargestellt, wobei dieser Öffnungswinkel β in etwa 3° bis 15°, vorzugsweise 5° bis 10°, im Ausführungsbeispiel etwa 6° beträgt. Der Zuführkanal 15 weitet sich auf eine maximale Höhe H auf, welche größer als die Höhe h des formgebenden Düsenkanals 14 ist. Die maximale Höhe H des Zuführkanals 15 ist zumindest 50 % größer als die Höhe h des Düsenkanals 14, bevorzugt zumindest zweimal so groß.

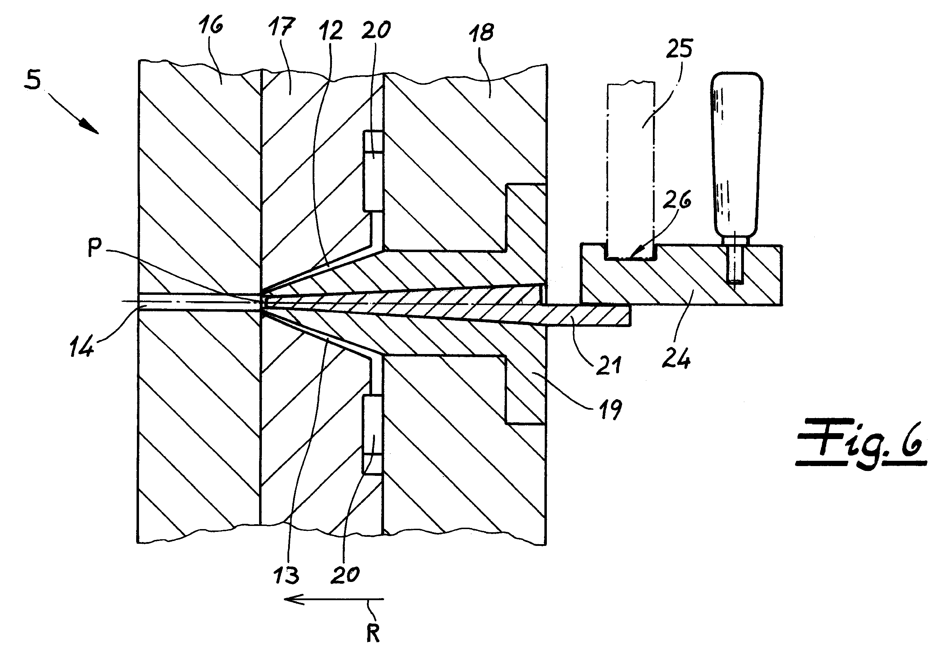

Grundsätzlich besteht die Möglichkeit, im Zuge des Anfahrens der Anlage unmittelbar ein fertigbestücktes LED-Funktionsband 2 zuzuführen. In der Praxis wurde jedoch beobachtet, dass der erste Abschnitt des auf diese Weise hergestellten LED-Bandes 1 nicht den üblichen Qualitätsanforderungen genügt, so dass in der Regel ein Ausschuss produziert wird. Nachteilig kann dabei die Tatsache sein, dass auch im Bereich dieses Ausschusses ein bestücktes LED-Funktionsband enthalten ist. Um die Kosten dieses Ausschusses zu verringern, kann es zweckmäßig sein, zunächst ein dem LED-Funktionsband 2 vorgeordnetes unbestücktes Trägerband 2a als Vorlauf in die Kunststoffschmelze einzubetten und erst nach einem Vorlauf vorgegebener Länge das bestückte LED-Funktionsband 2 in das Extrusionswerkzeug 5 einzuführen. Dieses unbestückte Trägerband 2a, welches den Vorlauf bildet, ist in der Regel fest mit dem LED-Funktionsband 2 verbunden, es ist gleichsam Teil derselben "Rolle". Es kann eine Länge von zum Beispiel 5 m bis 20 m aufweisen. Der Einsatz dieses unbestückten Trägerbandes 2a als Vorlauf hat den Vorteil, dass der Ausschuss mit minderer Qualität lediglich von einem unbestückten Band gebildet wird, so dass die Kosten verringert werden. Um den Einsatz dieses unbestückten Vorlaufbandes weiter zu optimieren, kann - so wie in Fig. 6 dargestellt - vorübergehend, nämlich im Zuge des Anlaufs der Anlage ein Kompensationseinsatz 21 in den Zuführkanal 15 eingesetzt werden. Dieser Kompensationseinsatz 21, der auch als "Schuh" bezeichnet wird, bildet einen Zuführkanal, der in seinem Querschnitt dem Querschnitt des fertigen LED-Bandes entspricht. Durch diesen alternativen Zuführkanal, der in den Figuren nicht dargestellt ist, läuft das unbestückte Leerband und erst wenn sich ein zufriedenstellendes Extrusionsergebnis eingestellt hat, kann dann - sobald das bestückte LED-Funktionsband 2 folgt, herausgezogen werden. Dabei ist in Fig. 6 erkennbar, dass an den Kompensationseinsatz 21 ein Anschlusselement 24 angeschlossen ist, welches eine Ausnehmung 26 aufweist. In diese Ausnehmung 26 greift während des Extrusionsprozesses ein Arretierungselement 25 ein, sodass verhindert wird, dass die eintretende Schmelze den Schuh 22 aus dem Werkzeug herausdrückt. Ein Handgriff für das Einsetzen des Schuhs 21 ist ebenfalls angedeutet.

Jedenfalls lassen sich in der beschriebenen Weise LED-Bänder 1 in nahezu beliebiger Länge herstellen, die beispielsweise als Rollenware einfach gelagert und transportiert werden können. Die LED-Bänder 1 weisen in vorgegebenen Abständen sogenannte "Piercing-Stellen" auf, so dass sie unter Berücksichtigung der Abstände dieser Piercing-Stellen konfektioniert werden können.

## Patentansprüche

1. Verfahren zum kontinuierlichen Herstellen eines LED-Bandes (1),
mit einer Vorrichtung mit zumindest einem Extruder (7) zum Erzeugen einer transparenten Kunststoffschmelze und mit einem Extrusionswerkzeug (5), durch welches zumindest ein mit mehreren Leuchtdioden bestücktes LED-Funktionsband (2) hindurchgeführt wird,
wobei das LED-Funktionsband (2) in dem Extrusionswerkzeug (5) unter Bildung des LED-Bandes (1) in die transparente Kunststoffschmelze aus thermoplastischem Kunststoff eingebettet wird,
**dadurch gekennzeichnet, dass**
das Extrusionswerkzeug (5) zumindest einen oberen Schmelzekanal (12) und einen unteren Schmelzekanal (13) aufweist, welche in einen formgebenden Düsenkanal (14) münden, durch den das LED-Funktionsband (2) hindurchgeführt wird,
wobei dem Düsenkanal (14) ein sich entgegen der Transportrichtung (R) aufweitender Zuführkanal (15) für das LED-Funktionsband (2) vorgeordnet ist,
wobei die Schmelze mit der Maßgabe in das Extrusionswerkzeug eingeführt wird, dass sich in dem sich entgegen der Transportrichtung aufweitenden Zuführkanal, durch den das LED-Funktionsband zugeführt wird, eine Schmelzewulst entgegen der Transportrichtung ausbildet, in die das LED-Funktionsband einläuft, wobei sich der Zuführkanal (15) auf eine maximale Höhe (H) aufweitet, welche größer als die Höhe (h) des formgebenden Düsenkanals (14) ist, wobei die maximale Höhe (H) des Zuführkanals (15) zumindest 50 % größer als die Höhe (h) des Düsenkanals (14).

2. Verfahren nach Anspruch 1, **dadurch gekennzeichnet, dass** der obere Schmelzekanal (12) und/oder der untere Schmelzekanal (13) unter einem (mittleren) Winkel (α) von 10° bis 45°, vorzugsweise 15° bis 30° gegen die Transportrichtung (R) bzw. gegen die Horizontale angeordnet ist/sind.

3. Verfahren nach Anspruch 1 oder 2, **dadurch gekennzeichnet, dass** sich der Zuführkanal (15) entgegen der Transportrichtung (R) mit einem Öffnungswinkel (β) von 3° bis 15°, vorzugsweise 5° bis 10° aufweitet.

4. Verfahren nach einem der Ansprüche 1 bis 3, **dadurch gekennzeichnet, dass** das Extrusionswerkzeug (5) aus mehreren in Transportrichtung (R) hintereinander angeordneten Werkzeug-Platten (16, 17, 18) zusammengesetzt ist, wobei der formgebende Düsenkanal (14) in einer austrittsseitigen ersten Platte (16) und der Zuführkanal (15) im Bereich einer der ersten Platte (16) vorgeordneten zweiten Platte (17) angeordnet ist, wobei die Schmelzekanäle (12, 13) im Übergangsbereich zwischen der ersten Platte (16) und der zweiten Platte (17) in das eingangsseitige Ende des Düsenkanals (14) münden.

5. Verfahren nach Anspruch 4, **dadurch gekennzeichnet, dass** der zweiten Platte (17) eine dritten Platte (18) vorgeordnet ist, wobei der Zuführkanal (15) im Bereich der zweiten Platte (17) und der dritten Platte (18) angeordnet ist.

6. Verfahren nach Anspruch 5, **dadurch gekennzeichnet, dass** das Extrusionswerkzeug (3) zumindest einen Schmelzeverteilkanal (20) aufweist, über welchen die Schmelze von dem Extruder (7) den Schmelzekanälen (12, 13) zuführbar ist, wobei der Schmelzeverteilkanal (20) zwischen der zweiten Platte (17) und der dritten Platte (18) angeordnet ist.

7. Verfahren nach einem der Ansprüche 1 bis 6, **dadurch gekennzeichnet, dass** der Zuführkanal (15) von einem Einsatz (19), zum Beispiel Keileinsatz, gebildet wird oder in einen solchen Einsatz (19) integriert ist, wobei der Einsatz (19) in eine Ausnehmung der zweiten Platte (17) und gegebenenfalls der dritten Platte (18) eingesetzt ist, wobei die Schmelzekanäle (12, 13) zwischen der Ausnehmung der zweiten Platte (17) und dem Einsatz (19) gebildet werden.

8. Verfahren nach einem der Ansprüche 1 bis 7, **dadurch gekennzeichnet, dass** in den sich aufweitenden Zuführkanal (15) während einer Vorlauf-Zuführung eines unbestückten Trägerbandes ein Kompensationseinsatz (21) einsetzbar ist, der einen inneren Leerband-Zuführkanal aufweist oder bildet.

9. Verfahren nach einem der Ansprüche 1 bis 8, **dadurch gekennzeichnet, dass** die maximale Höhe (H) des Zuführkanals (15) zumindest zweimal so groß ist wie die Höhe (h) des Düsenkanals (14).

10. Verfahren nach einem der Ansprüche 1 bis 9, **dadurch gekennzeichnet, dass** sich eine Schmelzewulst ausbildet, deren Höhe größer als die Höhe des fertigen LED-Bandes und/oder größer als die Höhe des formgebenden Düsenkanals des Werkzeugs ist.

11. Verfahren nach Anspruch 10, **dadurch gekennzeichnet, dass** sich eine Schmelzewulst ausbildet, deren Höhe zumindest 50 % größer als die Höhe des fertigen LED-Bandes und/oder als die Höhe des formgebenden Düsenkanals des Werkzeugs ist, besonders bevorzugt zumindest zweimal so groß.

## Claims

1. Method for the continuous manufacturing of an LED strip (1), comprising a device having at least one extruder (7) for producing a transparent plastic melt and having an extrusion tool (5), at least one LED functional strip (2) equipped with a plurality of light-emitting diodes being passed therethrough,
wherein the LED functional strip (2) is embedded in the transparent plastic melt made of thermoplastic material in the extrusion tool (5), forming the LED strip (1),
**characterized in that** the extrusion tool (5) comprises at least one upper melt duct (12) and one lower melt duct (13) which discharge into a shaping nozzle duct (14), the LED functional strip (2) being passed therethrough,
wherein a supply duct (15) for the LED functional strip (2) is arranged upstream of the nozzle duct (14), said supply duct widening counter to the direction of transport (R),
wherein the melt is introduced into the extrusion tool with the proviso that in the supply duct which widens counter to the direction of transport, the LED functional strip being supplied through said supply duct, a melt bead is formed counter to the direction of transport, the LED functional strip travelling into said melt bead, wherein the supply duct (15) widens to a maximum height (H) which is greater than the height (h) of the shaping nozzle duct (14), wherein the maximum height (H) of the supply duct (15) is at least 50% greater than the height (h) of the nozzle duct (14).

2. Method according to Claim 1, **characterized in that** the upper melt duct (12) and/or the lower melt duct (13) is/are arranged at an (average) angle (α) of 10° to 45°, preferably 15° to 30°, counter to the direction of transport (R) and/or counter to the horizontal.

3. Method according to Claim 1 or 2, **characterized in that** the supply duct (15) counter to the direction of transport (R) widens with an opening angle (β) of 3° to 15°, preferably 5° to 10°.

4. Method according to one of Claims 1 to 3, **characterized in that** the extrusion tool (5) is made up of a plurality of tool plates (16, 17, 18) arranged one behind the other in the direction of transport (R), wherein the shaping nozzle duct (14) is arranged in a first plate (16) on the outlet side and the supply duct (15) is arranged in the region of a second plate (17) arranged upstream of the first plate (16), wherein in the transition region between the first plate (16) and the second plate (17) the melt ducts (12, 13) discharge into the end of the nozzle duct (14) on the inlet side.

5. Method according to Claim 4, **characterized in that** a third plate (18) is arranged upstream of the second plate (17), wherein the supply duct (15) is arranged in the region of the second plate (17) and the third plate (18).

6. Method according to Claim 5, **characterized in that** the extrusion tool (3) has at least one melt distribution duct (20), the melt being able to be supplied thereby from the extruder (7) to the melt ducts (12, 13), wherein the melt distribution duct (20) is arranged between the second plate (17) and the third plate (18).

7. Method according to one of Claims 1 to 6, **characterized in that** the supply duct (15) is formed by an insert (19), for example a wedge insert, or is integrated in such an insert (19), wherein the insert (19) is introduced into a recess of the second plate (17) and optionally the third plate (18), wherein the melt ducts (12, 13) are formed between the recess of the second plate (17) and the insert (19).

8. Method according to one of Claims 1 to 7, **characterized in that** a compensation insert (21) is able to be inserted into the widening supply duct (15) during a preliminary supply of an unequipped carrier strip, said compensation insert having or forming an inner empty strip supply duct.

9. Method according to one of Claims 1 to 8, **characterized in that** the maximum height (H) of the supply duct (15) is at least twice as great as the height (h) of the nozzle duct (14).

10. Method according to one of Claims 1 to 9, **characterized in that** a melt bead is formed, the height thereof being greater than the height of the finished LED strip and/or greater than the height of the shaping nozzle duct of the tool.

11. Method according to Claim 10, **characterized in that** a melt bead is formed, the height thereof being at least 50% greater than the height of the finished LED strip and/or than the height of the shaping nozzle duct of the tool, particularly preferably at least twice as great.

## Revendications

1. Procédé pour fabriquer en continu une bande à diodes électroluminescentes (DEL) (1), avec un dispositif avec au moins une extrudeuse (7) pour produire une masse en fusion de matière plastique transparente et avec un outil d'extrusion (5), à travers lequel est passée au moins une bande fonctionnelle à DEL (2) équipée de plusieurs diodes électroluminescentes,
la bande fonctionnelle à DEL (2) est incorporée dans l'outil d'extrusion (5) en formant la bande à DEL (1) dans la masse en fusion de matière plastique transparente composée de matière plastique thermoplastique, **caractérisé en ce que**
l'outil d'extrusion (5) comporte au moins un conduit supérieur de masse en fusion (12) et un conduit inférieur de masse en fusion (13), lesquels débouchent dans un conduit de buse de formage (14), à travers lequel est passée la bande fonctionnelle à DEL (2),
un conduit d'alimentation (15) s'élargissant à l'opposé de la direction de transport (R) pour la bande fonctionnelle à DEL (2) étant disposé en amont du conduit de buse (14),
la masse en fusion étant introduite conformément dans l'outil d'extrusion de sorte qu'il se forme dans le conduit d'alimentation s'élargissant à l'opposé de la direction de transport à travers lequel est acheminée la bande fonctionnelle à DEL, un bourrelet de masse en fusion à l'opposé de la direction de transport dans lequel pénètre la bande fonctionnelle à DEL, le conduit d'alimentation (15) s'élargissant sur une hauteur maximale (H), laquelle est plus grande que la hauteur (h) du conduit de buse de formage (14), la hauteur maximale (H) du conduit d'alimentation (15) étant au moins de 50% plus grande que la hauteur (h) du conduit de buse (14).

2. Procédé selon la revendication 1, **caractérisé en ce que** le conduit supérieur de masse en fusion (12) et/ou le conduit inférieur de masse en fusion (13) est/sont disposé(s) dans un angle (moyen) (α) de 10° à 45°, de préférence 15° à 30° par rapport à la direction de transport (R) ou par rapport à l'horizontale.

3. Procédé selon la revendication 1 ou 2, **caractérisé en ce que** le conduit d'alimentation (15) s'élargit à l'opposé de la direction de transport (R) avec un angle d'ouverture (β) de 3° à 15°, de préférence 5° à 10°.

4. Procédé selon l'une quelconque des revendications 1 à 3, **caractérisé en ce que** l'outil d'extrusion (5) est composé de plusieurs plaques d'outil (16, 17, 18) disposées les unes derrière les autres dans la direction du transport (R), le conduit de buse de formage (14) étant disposé dans une première plaque (16) côté sortie et le conduit d'alimentation (15) à proximité d'une deuxième plaque disposée en amont de la première plaque (16), les conduits de masse en fusion (12, 13) débouchant dans l'extrémité côté entrée du conduit de buse (14) dans une zone de passage entre la première plaque (16) et la deuxième plaque (17).

5. Procédé selon la revendication 4, **caractérisé en ce qu'**une troisième plaque (18) est disposée en amont de la deuxième plaque (17), le conduit d'alimentation (15) étant disposé à proximité de la deuxième plaque (17) et de la troisième plaque (18).

6. Procédé selon la revendication 5, **caractérisé en ce que** l'outil d'extrusion (3) comporte au moins un conduit de distribution de masse en fusion (20) par le biais duquel la masse en fusion peut être acheminée de l'extrudeuse (7) aux conduits de masse en fusion (12, 13), le conduit de distribution de masse en fusion (20) étant disposé entre la deuxième plaque (17) et la troisième plaque (18).

7. Procédé selon l'une quelconque des revendications 1 à 6, **caractérisé en ce que** le conduit d'alimentation (15) est formé par une pièce d'insertion (19), par exemple une pièce d'insertion cunéiforme ou est intégré dans une telle pièce d'insertion (19), la pièce d'insertion (19) étant insérée dans une cavité de la deuxième plaque (17) et le cas échéant de la troisième plaque (18), les conduits de masse en fusion (12, 13) étant formés entre la cavité de la deuxième plaque (17) et la pièce d'insertion (19).

8. Procédé selon l'une quelconque des revendications 1 à 7, **caractérisé en ce qu'**une pièce d'insertion de compensation (21) peut être insérée dans le conduit d'alimentation (15) s'élargissant pendant une alimentation d'amorce d'une bande de support non équipée, laquelle pièce d'insertion de compensation comporte ou forme un conduit d'alimentation intérieur de bande vide.

9. Procédé selon l'une quelconque des revendications 1 à 8, **caractérisé en ce que** la hauteur maximale (H) du conduit d'alimentation (15) est au moins deux fois aussi grande que la hauteur (h) du conduit de buse (14).

10. Procédé selon l'une quelconque des revendications 1 à 9, **caractérisé en ce qu'**un bourrelet de masse en fusion se forme, dont la hauteur est plus grande que la hauteur de la bande à DEL terminée et/ou plus grande que la hauteur du conduit de buse de formage de l'outil.

11. Procédé selon la revendication 10, **caractérisé en ce qu'**il se forme un bourrelet de masse en fusion dont la hauteur est au moins de 50% plus grande que la hauteur de la bande à DEL terminée et/ou que la hauteur du conduit de buse de formage de l'outil, de manière particulièrement préférée au moins deux fois plus grande.
